# EUROPEAN PATENT SPECIFICATION

(11) **EP 4 362 321 B1**
(45) Date of publication and mention of the grant of the patent: **25.06.2025**
(21) Application number: 21946948.3
(22) Date of filing: 21.06.2021
(51) Int. Cl.: H02P 29/024, G01R 31/34

(54) **FAILURE SYMPTOM DETECTION DEVICE AND FAILURE SYMPTOM DETECTION METHOD FOR ELECTRIC MOTOR-PROVIDED EQUIPMENT**
VORRICHTUNG ZUR ERKENNUNG VON FEHLERSYMPTOMEN UND VERFAHREN ZUR ERKENNUNG VON FEHLERSYMPTOMEN FÜR ELEKTROMOTORSEITIG BEREITGESTELLTE AUSRÜSTUNG
DISPOSITIF DE DÉTECTION DE SYMPTÔME DE DÉFAILLANCE ET PROCÉDÉ DE DÉTECTION DE SYMPTÔME DE DÉFAILLANCE POUR ÉQUIPEMENT À MOTEUR ÉLECTRIQUE

(43) Date of publication of application: 01.05.2024
(73) Proprietor: MITSUBISHI ELECTRIC CORPORATION, Chiyoda-ku Tokyo 100-8310 (JP)
(72) Inventor: HIRAKIDA, Ken, Tokyo 100-8310 (JP); INOUE, Hiroshi, Tokyo 100-8310 (JP); KANEMARU, Makoto, Tokyo 100-8310 (JP); MATSUI, Yoshiki, Tokyo 100-8310 (JP); NAKAMURA, Takaharu, Tokyo 100-8310 (JP)
(74) Representative: Meissner Bolte Partnerschaft mbB
(86) International application number: PCT/JP2021/023302
(87) International publication number: WO 2022/269657

(56) References cited:
- EP-A1- 3 492 938
- EP-A1- 3 579 404
- WO-A1-2018/142569
- JP-A- 2008 286 608
- JP-B1- 6 824 493
- US-A1- 2019 199 251

## Description

### TECHNICAL FIELD

The present invention relates to a failure symptom detection device for electric motor-provided equipment and a failure symptom detection method for electric motor-provided equipment.

### BACKGROUND ART

In general, there are various loads using an electric motor as a motive-power source, e.g., a pump, a conveyor belt, and a compressor (hereinafter, such loads are referred to as electric motor-provided equipment). Conventionally, in a case where abnormality has occurred in such electric motor-provided equipment, the abnormality is often diagnosed and determined by senses of a person in a maintenance department. In particular, for electric motor-provided equipment of high importance, diagnosis needs to be performed regularly, leading to increase in labor and cost for maintenance and management.

Accordingly, there has been an increasing interest in technology that makes it possible to monitor electric motor-provided equipment automatically and constantly without depending on person's senses.

However, in many cases, constant monitoring for an electric motor is based on the premise that various sensors are attached for each electric motor. Examples of such sensors include a torque meter, an acceleration sensor, and a temperature sensor.

As conventional technology, it is proposed that current and voltage signals applied to a stator of an electric motor are analyzed on the basis of detection outputs from the various sensors, whereby a failure symptom of the electric motor-provided equipment is detected (see, for example, Patent Document 1).

### CITATION LIST

### PATENT DOCUMENT

| | |
|---|---|
| Patent Document 1: | Japanese Laid-Open Patent Publication JP 2007- 170 411 A |

### SUMMARY OF THE INVENTION

### PROBLEM TO BE SOLVED BY THE INVENTION

However, three-phase currents outputted to the electric motor are likely to be influenced by electric noise due to inverter driving or variations due to an operation mode which changes depending on the load state or the like, for example. Then, electric signals to be used for diagnosis are distorted due to the above influence, so that a noise signal might be erroneously detected. Therefore, failure symptom detection disclosed in Patent Document 1 has a problem that it is difficult to detect abnormality of the electric motor-provided equipment accurately.

The present invention has been made to solve the above problem, and an object of the present invention is to provide a failure symptom detection device for electric motor-provided equipment and a failure symptom detection method for electric motor-provided equipment that can accurately detect a failure symptom of electric motor-provided equipment while being hardly influenced by noise and without adding an extra sensor.

### MEANS TO SOLVE THE PROBLEM

A failure symptom detection device for electric motor-provided equipment according to the present invention is a device for detecting a failure symptom of the electric motor-provided equipment including a load with an electric motor used as a motive-power source and a driving device which supplies power to the electric motor and drives the electric motor, the failure symptom detection device including: a current detection unit which detects current flowing from the driving device to the electric motor; a diagnosis calculation unit which calculates an index value for determination for presence/absence of abnormality of the electric motor-provided equipment, on the basis of a result of detection by the current detection unit; a diagnosis determination unit which determines presence/absence of abnormality of the electric motor-provided equipment on the basis of a result of calculation by the diagnosis calculation unit; and a diagnosis result reporting unit which reports a result of diagnosis determined by the diagnosis determination unit, to outside.

The diagnosis calculation unit includes a starting current extraction unit which, from the current detected by the current detection unit, extracts current in an acceleration period until a constant rotational speed is reached after starting of the electric motor, a data generation unit which divides data of the current in the acceleration period extracted by the starting current extraction unit, into plural pieces of data, and a frequency analysis unit which performs frequency analysis on each piece of data divided by the data generation unit.

A failure symptom detection method for electric motor-provided equipment according to the present invention is a method for detecting a failure symptom of the electric motor-provided equipment including a load with an electric motor used as a motive-power source and a driving device which supplies power to the electric motor and drives the electric motor, the failure symptom detection method including: a first step of detecting current flowing to the electric motor; a second step of, from the current obtained in the first step, extracting current in an acceleration period until a constant rotational speed is reached after starting of the electric motor; a third step of dividing data of the current in the acceleration period extracted in the second step, into plural pieces of data, and performing frequency analysis on each divided piece of data, to generate a spectrum waveform; a fourth step of detecting an intensity value of a spectrum peak arising in a rotational frequency band of the electric motor, from the spectrum waveform obtained in the third step; a fifth step of comparing the intensity value of the spectrum peak obtained in the fourth step and a predetermined reference value; a sixth step of determining presence/absence of abnormality of the electric motor-provided equipment from a result of comparison in the fifth step; and a seventh step of reporting a result of determination in the sixth step to outside.

### EFFECT OF THE INVENTION

The failure symptom detection device for electric motor-provided equipment and the failure symptom detection method for electric motor-provided equipment according to the present invention can accurately detect a failure symptom of electric motor-provided equipment while being hardly influenced by noise and without adding an extra sensor.

### BRIEF DESCRIPTION OF THE DRAWINGS

FIG. 1 is a block diagram showing a schematic configuration of electric motor-provided equipment and a failure symptom detection device according to the present invention.
FIG. 2 is a block diagram showing a schematic configuration of an air conditioner as an example of electric motor-provided equipment according to Embodiment 1 of the present invention.
FIG. 3 is a block diagram showing a configuration of a control device for controlling a driving device in electric motor-provided equipment according to Embodiment 1 of the present invention.
FIG. 4 is a block diagram showing a schematic configuration of the failure symptom detection device according to Embodiment 1 of the present invention.
FIG. 5 illustrates an example of a spectrum waveform obtained through frequency analysis on phase current.
FIG. 6 illustrates an example of a frequency spectrum waveform obtained through frequency analysis on q-axis current.
FIG. 7 is a flowchart showing a failure symptom detection method according to Embodiment 1 of the present invention.
FIG. 8 is a waveform diagram showing temporal changes in a rotational speed and a current value when an electric motor is started, according to Embodiment 1 of the present invention.
FIG. 9 illustrates an example of a frequency analysis result for q-axis current according to Embodiment 1 of the present invention.
FIG. 10 is a block diagram showing a schematic configuration of electric motor-provided equipment and a failure symptom detection device according to Embodiment 2 of the present invention.
FIG. 11 is a block diagram showing another schematic configuration of electric motor-provided equipment and a failure symptom detection device according to Embodiment 2 of the present invention.
FIG. 12 is a block diagram showing a hardware configuration of a control device and the like according to the embodiments of the present invention.

### DESCRIPTION OF EMBODIMENTS

### Embodiment 1

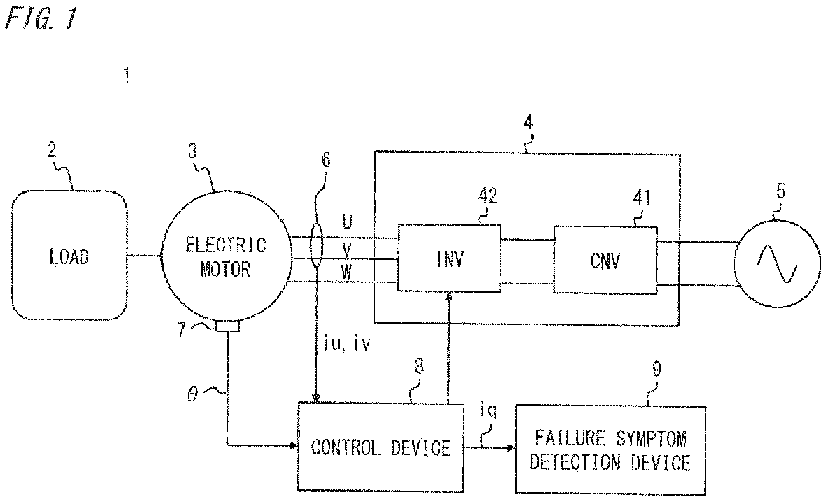

FIG. 1 is a block diagram showing a schematic configuration of electric motor-provided equipment and a failure symptom detection device according to the present invention.

Electric motor-provided equipment 1 includes a load 2 with an electric motor 3 used as a motive-power source, a driving device 4 which supplies power to the electric motor 3 and drives the electric motor 3, and a control device 8 for controlling operation of the driving device 4. An AC power supply 5 is connected to the driving device 4.

Here, the electric motor-provided equipment 1 is, for example, a water pump, a vacuum pump, a conveyor belt, an air conditioner, and the like. In Embodiment 1, a case of taking an air conditioner as an example of the electric motor-provided equipment 1 and detecting a failure symptom thereof will be described.

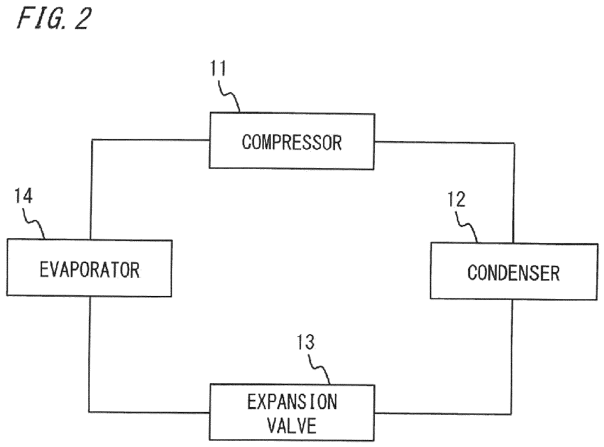

FIG. 2 is a block diagram showing a schematic configuration of an air conditioner as an example of electric motor-provided equipment according to Embodiment 1 of the present invention.

The air conditioner operates as a refrigeration cycle apparatus and includes a compressor 11, a condenser 12, an expansion valve 13, and an evaporator 14. In this refrigeration cycle, a refrigerant circulates through the compressor 11, the condenser 12, the expansion valve 13, and the evaporator 14 in this order.

The compressor 11 compresses and discharges a gas refrigerant, and corresponds to the load 2 in FIG. 1. The compressor 11 compresses a gas refrigerant sucked using a driving force of the electric motor 3. The electric motor 3 is connected to a compression mechanism (not shown) that compresses the gas refrigerant in the refrigeration cycle.

The condenser 12 condenses the gas refrigerant discharged from the compressor 11 and discharges a liquid refrigerant. The expansion valve 13 undergoes valve opening control to expand the refrigerant from the condenser 12, thus reducing the pressure thereof. The evaporator 14 evaporates a liquid-state refrigerant (liquid refrigerant) discharged from the expansion valve 13 and discharges a gas-state refrigerant (gas refrigerant).

The driving device 4 includes a converter 41 and an inverter 42. In FIG. 1, the converter is abbreviated as CNV and the inverter is abbreviated as INV.

The converter 41 receives AC current from the AC power supply 5, converts the AC current to DC current, and outputs the DC current to the inverter 42. The frequency of the AC power supply 5 is, for example, 50 Hz or 60 Hz.

The inverter 42 includes an inverter main circuit including a plurality of switching elements (not shown). The inverter 42 receives a pulse width modulation (PWM) signal from the control device 8 and performs ON/OFF switching of the switching elements to output three-phase currents (for U, V, W phases) to the electric motor 3 for driving the compressor 11 which is the load 2.

Of the three-phase currents (iu, iv, iw) outputted to the electric motor 3, for example, U-phase current iu and V-phase current iv are detected by a current sensor (current detection unit) 6 and outputted to the control device 8. A rotation angle θ of a rotor of the electric motor 3 is detected by an angle sensor 7 provided to the electric motor 3 and is outputted to the control device 8.

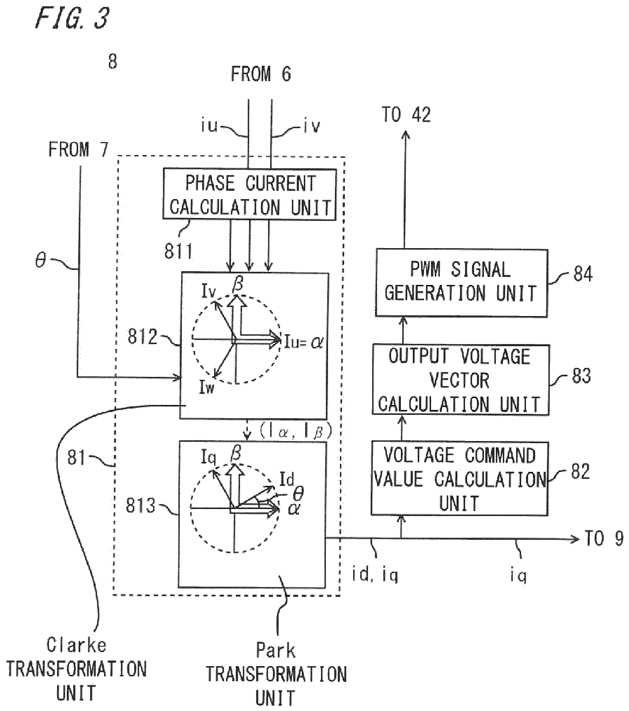

FIG. 3 is a block diagram showing a configuration of the control device for controlling operation of the driving device according to Embodiment 1.

The control device 8 outputs a PWM signal to the inverter 42, to perform vector control, and includes a d-q transformation unit 81, a voltage command value calculation unit 82, an output voltage vector calculation unit 83, and a PWM signal generation unit 84. The d-q transformation unit 81 includes a phase current calculation unit 811, a Clarke transformation unit 812, and a Park transformation unit 813.

Here, the d-q transformation unit 81, the voltage command value calculation unit 82, the output voltage vector calculation unit 83, and the PWM signal generation unit 84 may be each implemented by dedicated hardware, or may be implemented by a computer such as a central processing unit (CPU) executing a program stored in a memory.

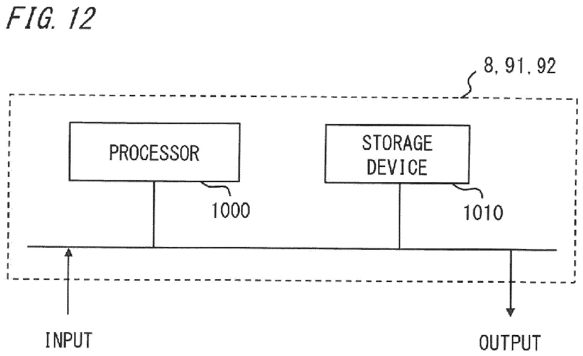

That is, the control device 8 is composed of a processor 1000 and a storage device 1010, as shown in a hardware example in FIG. 12. The storage device 1010 is provided with a volatile storage device such as a random access memory and a nonvolatile auxiliary storage device such as a flash memory (not shown). An auxiliary storage device of a hard disk may be provided instead of the flash memory. The processor 1000 executes a program inputted from the storage device 1010. In this case, the program is inputted from the auxiliary storage device to the processor 1000 via the volatile storage device. The processor 1000 may output data such as a calculation result to the volatile storage device of the storage device 1010 or may store such data into the auxiliary storage device via the volatile storage device.

The phase current calculation unit 811 receives the U-phase current iu and the V-phase current iv detected by the current sensor 6 and calculates W-phase current iw. Here, V-phase current iv and W-phase current iw may be detected to calculate U-phase current iu, or W-phase current iw and U-phase current iu may be detected to calculate V-phase current iv. The phase currents (iu, iv, iw) calculated by the phase current calculation unit 811 are outputted to the Clarke transformation unit 812 at the subsequent stage.

The phase currents (iu, iv, iw) change along with change in the rotation angle θ (mechanical angle) of the rotor of the electric motor 3. In the following description, the rotation angle θ is described as a value measured by the angle sensor 7. However, the angle sensor 7 is not an essential component in the present invention and the rotation angle θ may be calculated by another method. For example, the rotation angle θ may be calculated from the phase currents (iu, iv, iw) and a voltage command value as performed in known position sensorless control.

The Clarke transformation unit 812 transforms the phase currents (iu, iv, iw) to two-phase currents (iα, iβ) in a two-axis coordinate system (α-β coordinate system), and outputs the two-phase currents (iα, iβ) to the Park transformation unit 813 at the subsequent stage.

The Park transformation unit 813 receives the rotation angle θ of the rotor detected by the angle sensor 7 provided to the electric motor 3, and transforms the two-phase currents (iα, iβ) in the two-axis coordinate system (α-β coordinate system) to dq-axis currents (id, iq) corresponding to coordinates in a rotating coordinate system (d-q coordinate system). The Park transformation unit 813 outputs the values of the dq-axis currents (id, iq) to the voltage command value calculation unit 82 at the subsequent stage and outputs the value of the q-axis current iq to a failure symptom detection device 9.

Here, the d-axis current id is an excitation current component and produces a rotating magnetic field in the electric motor 3. The q-axis current iq is a torque current component and produces torque of the electric motor 3. The dq-axis currents (id, iq) correspond to values obtained when αβ-phase currents (iα, iβ) rotating by the rotation angle θ in the coordinate system at rest are measured in the rotating coordinate system that follows the rotation, and therefore the dq-axis currents (id, iq) have no change in the rotation angle 0.

The voltage command value calculation unit 82 calculates a difference between an actual voltage command value and the values of the dq-axis currents (id, iq) outputted from the Park transformation unit 813. Next, the output voltage vector calculation unit 83 calculates a correction value for correcting the calculated difference. Finally, the PWM signal generation unit 84 generates a PWM signal on the basis of the corrected voltage command value. Thus, the electric motor 3 is controlled into an ideal rotation state in accordance with the command value.

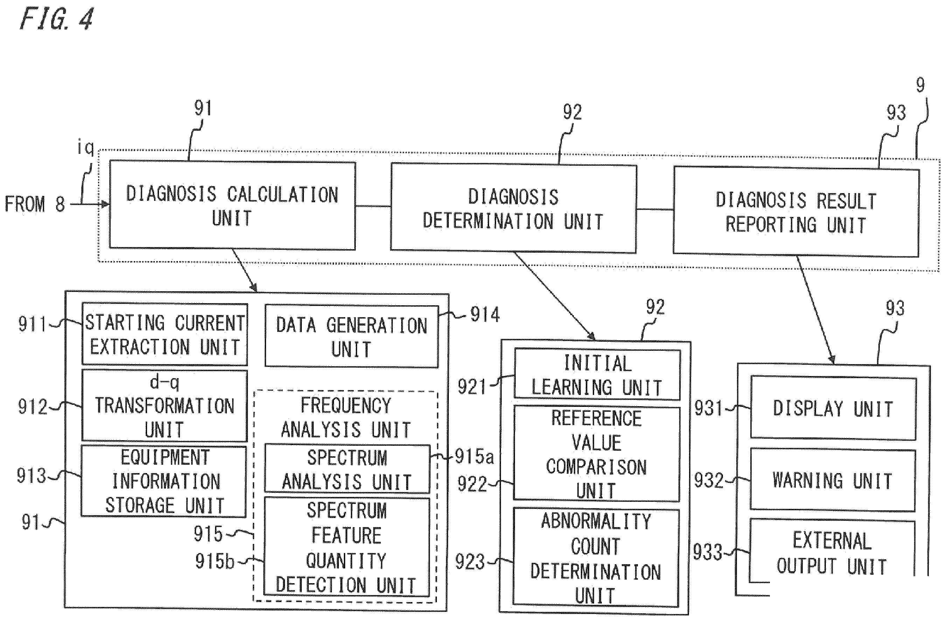

FIG. 4 is a block diagram showing a configuration of the failure symptom detection device according to Embodiment 1.

The failure symptom detection device 9 is for detecting a failure symptom of the electric motor-provided equipment 1 (load 2 or electric motor 3) and includes a diagnosis calculation unit 91, a diagnosis determination unit 92, and a diagnosis result reporting unit 93.

Here, the diagnosis calculation unit 91 includes a starting current extraction unit 911, a d-q transformation unit 912, an equipment information storage unit 913, a data generation unit 914, and a frequency analysis unit 915. The frequency analysis unit 915 includes a spectrum analysis unit 915a and a spectrum feature quantity detection unit 915b.

Here, the d-q transformation unit 912 is a common unit shared as the d-q transformation unit 81 included in the control device 8, and uses the q-axis current iq obtained through d-q transformation of the phase currents (iu, iv, iw) calculated on the basis of a detection output from the current sensor 6 in the d-q transformation unit 81. Instead of being shared as the d-q transformation unit 81, it is also possible to perform d-q transformation by the d-q transformation unit 912 after detecting the phase currents (iu, iv, iw) by the current sensor 6.

The diagnosis determination unit 92 includes an initial learning unit 921, a reference value comparison unit 922, and an abnormality count determination unit 923.

The diagnosis result reporting unit 93 includes a display unit 931 such as a liquid crystal display, a warning unit 932 such as a lamp, and an external output unit 933 such as a printer.

Specific functions of the diagnosis calculation unit 91, the diagnosis determination unit 92, and the diagnosis result reporting unit 93 will become clear when operation processes in the respective units are described. The diagnosis calculation unit 91 and the diagnosis determination unit 92 may be implemented by dedicated hardware, or may be implemented by a computer such as a central processing unit (CPU) executing a program stored in a memory.

That is, the diagnosis calculation unit 91 and the diagnosis determination unit 92 are each composed of a processor 1000 and a storage device 1010, as shown in a hardware example in FIG. 12. The storage device 1010 is provided with a volatile storage device such as a random access memory and a nonvolatile auxiliary storage device such as a flash memory (not shown). An auxiliary storage device of a hard disk may be provided instead of the flash memory. The processor 1000 executes a program inputted from the storage device 1010. In this case, the program is inputted from the auxiliary storage device to the processor 1000 via the volatile storage device. The processor 1000 may output data such as a calculation result to the volatile storage device of the storage device 1010 or may store such data into the auxiliary storage device via the volatile storage device.

As current used for failure symptom detection, either of the dq-axis currents (id, iq), either of the αβ-phase currents (iα, iβ), or any of the phase currents (iu, iv, iw) may be used. In Embodiment 1, failure symptom detection is performed using the q-axis current iq.

In a case where wear of a sliding part of the compression mechanism, which occupies most of abnormal cases of the compressor, has occurred, an air gap between the stator and the rotor of the electric motor vibrates, so that permeance changes. Therefore, each phase current is suitably used for failure symptom detection of the compressor. Also in a case where a bearing of the electric motor is worn, gap vibration occurs similarly, and therefore using each phase current is a suitable method for abnormality detection of the electric motor. For detection of each phase current, it suffices that the current sensor 6 is provided to a power supply cable, and another sensor need not be added. Thus, there is an advantage in terms of cost as well.

When the phase current flowing in the stator of the electric motor 3 or the q-axis current obtained through d-q transformation of the phase current is subjected to frequency analysis, characteristic spectrum peaks arise because current variation due to a failure symptom as described above occurs periodically.

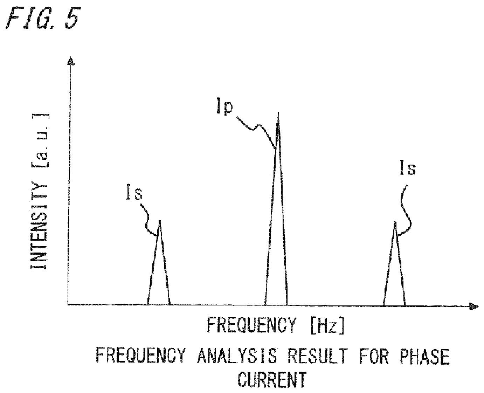

FIG. 5 illustrates an example of a spectrum waveform when the phase current (e.g., U-phase current iu) is subjected to frequency analysis.

In a case where current variation due to a failure symptom as described above occurs periodically, characteristic spectrum peaks Is as sideband waves arise on both sides near a peak Ip of the power supply frequency, at positions different among abnormality types. For example, in a case of abnormality such as misalignment or imbalance, sideband-wave peaks Is arise on both sides of the peak Ip of the power supply frequency, at positions away therefrom by a rotational frequency. In a case of abnormality due to a bearing of the electric motor 3, sideband-wave peaks Is arise on both sides of the power supply frequency, at positions away therefrom by a natural frequency of the bearing.

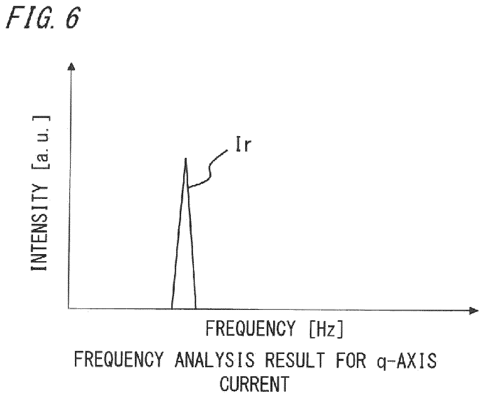

FIG. 6 illustrates an example of a spectrum waveform when the q-axis current iq is subjected to frequency analysis.

As in the case of FIG. 5, a characteristic spectrum peak arises at a position different among abnormality types. For example, in a case where whirling of an electric motor shaft occurs due to deterioration of a bearing or the like, a characteristic spectrum peak Ir arises in a rotational frequency band.

In general, in a method of diagnosing a device state through frequency analysis on a current signal of the electric motor 3, the analysis has been conventionally performed using the current signal under operation at a constant rotational speed. However, in a case where the load 2 has a mechanism part such as the compressor 11, a force having a rotational frequency component might be applied. In particular, in a scroll compressor, a rotational-frequency-component force is applied at a compression mechanism of a scroll part.

Along with this, on a similar principle, a spectrum peak of a rotational frequency component arises in each phase current of the electric motor 3. Therefore, in such a case, it is difficult to discriminate between this spectrum peak and the characteristic spectrum peak due to abnormality of the sliding part of the compression mechanism, and thus there is a problem that a failure symptom cannot be detected accurately. The present invention is to solve such a problem.

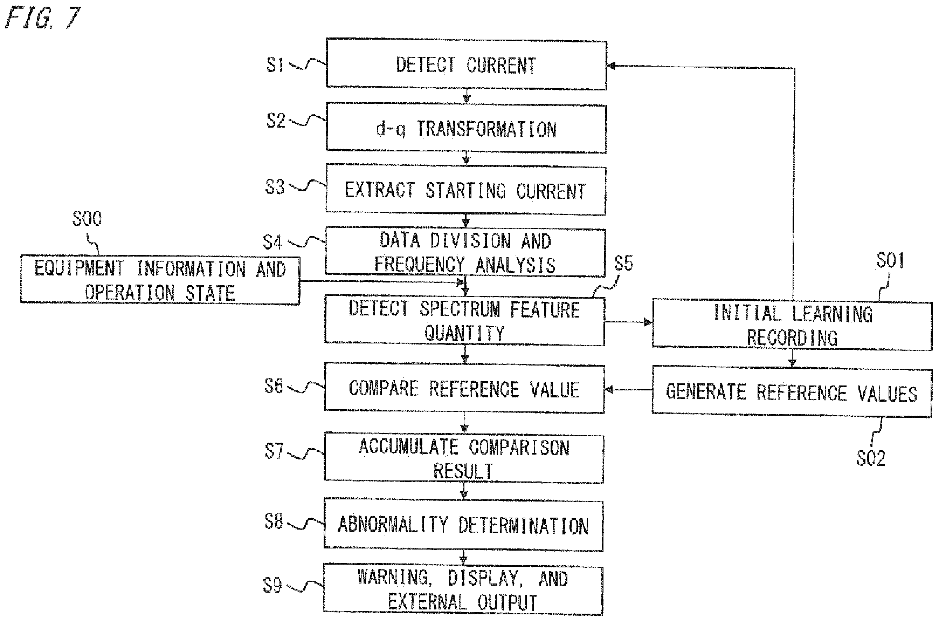

FIG. 7 is a flowchart showing a failure symptom detection method by the failure symptom detection device according to Embodiment 1 of the present invention. In the drawing, reference characters S mean processing steps.

First, the d-q transformation unit 81 calculates the phase currents (iu, iv, iw) on the basis of a detection output from the current sensor 6 (step S1), and performs d-q transformation thereof (step S2).

Next, the starting current extraction unit 911 of the diagnosis calculation unit 91 extracts the q-axis current iq in an acceleration period until a constant rotational speed is reached after starting, except for a time just after starting of the electric motor 3 (step S3). The starting current extraction unit 911 may extract any of the phase currents (iu, iv, iw) in the acceleration period and then the d-q transformation unit 912 may perform d-q transformation of the extracted phase current.

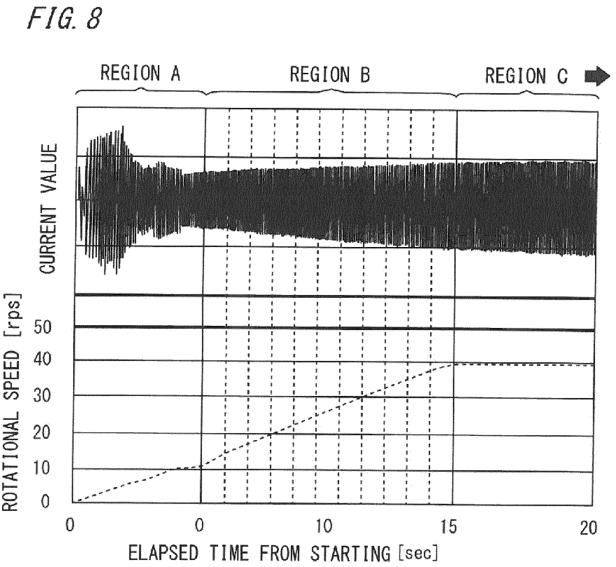

FIG. 8 is a waveform diagram showing temporal changes in the rotational speed and the current value when the electric motor is started. The lower-side graph shows temporal change in the rotational speed until the constant rotational speed is reached after starting of the electric motor 3, and the upper-side graph shows temporal change in the phase current (e.g., U-phase current iu) in this case.

A region A is a period in which inrush current flows just after starting of the electric motor 3, and the phase current greatly varies, leading to erroneous detection. Therefore, the region A is excluded in this analysis method.

A region B is the acceleration period until the rotational speed of the electric motor 3 reaches the constant value. The current in the acceleration period B is extracted and used as analysis data for failure symptom detection.

A region C is a period after the electric motor 3 reaches the constant rotational speed.

Then, after the q-axis current iq in the acceleration period B of the electric motor 3 is extracted by the starting current extraction unit 911, the data generation unit 914 divides data of the q-axis current iq into two or more pieces of data for data analysis on the extracted q-axis current iq (step S4). The division method is determined by the acceleration and the data sampling number. That is, in a case where the acceleration is great, a range where the power supply frequency and the spectrum peak vary is expanded, and therefore the number of divided pieces of data needs to be increased.

Next, the spectrum analysis unit 915a of the frequency analysis unit 915 performs frequency analysis on each of the plural pieces of data of the q-axis current iq divided by the data generation unit 914, to generate a spectrum waveform (step S4). As a method for the frequency analysis, for example, a current fast Fourier transform (FFT) analysis is known.

Meanwhile, in a variable-speed operation based on inverter driving, the number of pieces of data that can be used for frequency analysis is small and therefore there is a problem of being readily influenced by noise. In this regard, filter processing is performed so as to emphasize only feature components by applying compressed sensing to a current frequency characteristic having sparsity, whereby frequency analysis can be accurately performed even in a case of variable speed.

In the frequency analysis, without performing d-q transformation of the phase current, data obtained by detecting any of the phase currents (iu, iv, iw) may be directly divided into two or more pieces of data to perform frequency analysis.

As shown in the frequency spectrum waveforms in FIG. 5 and FIG. 6, whichever data of the phase current or the q-axis current iq is used, a spectrum peak of a rotational frequency component is detected due to eccentricity of the electric motor shaft based on abnormality of the sliding part of the compression mechanism. The rotational frequency component and the intensity value of the corresponding spectrum peak calculated by the diagnosis calculation unit 91 serve as index values for determining presence/absence of abnormality of the electric motor-provided equipment 1.

Separately from the above processing steps S1 to S4, information about the power supply frequency, the number of poles, and the rated rotational speed which are specifications of the electric motor 3, and information about an operation mode with which driving operation greatly varies, are inputted and stored into the equipment information storage unit 913 (step S00).

The rotational speed under no load of the electric motor 3 can be calculated as 120·fs/p (fs: power supply frequency, p: number of poles). Therefore, the rotational speed of the electric motor 3 has a value between the rotational speed under no load and the rated rotational speed, and thus a rotational frequency band can be specified. In addition, for example, in the compressor 11, the operation mode greatly differs between summer and winter. In this way, analysis data can be associated with each of a plurality of operation modes.

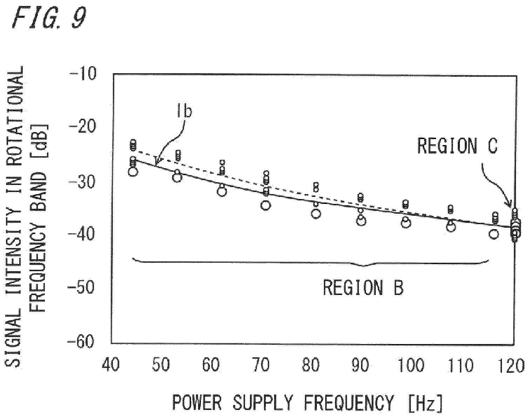

In the failure symptom detection device 9, in a case of determining presence/absence of a failure symptom in the electric motor-provided equipment 1 (load 2 or electric motor 3), as a premise therefor, data obtained initially at the start of diagnosis, i.e., in a state in which the electric motor-provided equipment 1 is new and has not been deteriorated due to aging yet, is regarded as normal, and from the normal data, reference values Ib for determining presence/absence of a failure symptom are set for respective power supply frequencies (see solid line in FIG. 9).

For this purpose, first, initially at the start of diagnosis, the spectrum feature quantity detection unit 915b detects intensity values of spectrum peaks arising in a rotational frequency band, which are obtained as a result of frequency analysis performed on each of the plural pieces of data divided in step S4 (step S5).

Subsequently, from initial data obtained through operation in each of set operation modes, the intensity values of spectrum peaks detected in step S5 and information about the operation modes and the power supply frequencies (or the rotational frequencies calculated from the power supply frequencies) stored in the equipment information storage unit 133, are associated with each other and then stored as learning data in the initial learning unit 921 (step S01).

Subsequently, the initial learning unit 921 generates the reference values Ib for the respective power supply frequencies from the stored learning data (step S02). For example, the reference values Ib are set at values such as two or three times a variation σ of the learning data, whereby an influence due to operation variation can be excluded. The reference values Ib may be set from outside.

As described above, after initial learning in which the initial learning unit 921 generates the reference values Ib for the respective power supply frequencies using initial data at the start of diagnosis as normal data is finished, next, actual diagnosis is started.

Then, regarding the spectrum peaks arising in the rotational frequency band, which are obtained as a result of frequency analysis performed on each of the plural pieces of data divided in the above step S4, when the intensity values are detected in step S5, the reference value comparison unit 922 compares each detected intensity value with the reference value Ib set by the initial learning unit 921 as described above (step S6).

As a result of comparison by the reference value comparison unit 922, when the detected intensity value exceeds the reference value Ib, the abnormality count determination unit 923 determines that there is abnormality and stores the comparison result for each of the divided pieces of data (step S7).

Then, in a case where abnormality determination is consecutively repeated for a specific rotational speed and a predetermined threshold is exceeded, the abnormality count determination unit 923 determines that the electric motor-provided equipment 1 has a failure symptom, thus determining that there is abnormality (step S8).

FIG. 9 illustrates an example of a result of frequency analysis on the q-axis current in a case where abnormality has occurred at the sliding part of the compression mechanism of the compressor 11.

In FIG. 9, filled circles indicate a result of initial learning using data obtained initially at the start of diagnosis as normal data, and a solid line indicates a result of initial learning performed by providing the reference values Ib for the respective power supply frequencies from the normal data. In addition, blank circles indicate data obtained after deterioration by aging and determined as abnormality, and a broken line indicates an average value thereof.

In operation of the electric motor 3, acceleration is performed to reach a power supply frequency of 120 Hz, and thereafter, operation at a constant rotational speed is performed in a state of 120 Hz. A rated rotational speed N (r/min) of the electric motor 3 is calculated as 120·fs/p (fs: power supply frequency, p: number of poles (6)), and as the power supply frequency increases, the rotational speed also increases proportionally.

As is found from the result shown in FIG. 9, in comparison between the reference value Ib and data obtained when the electric motor-provided equipment 1 has been deteriorated due to aging after continuous usage, it is difficult to perform abnormality detection in the constant-rotational-speed operation (120 Hz), but it is possible to perform discrimination for whether abnormal or normal in a low-speed region (40 Hz to 80 Hz) during acceleration from starting.

Thus, a force applied to the electric motor shaft by the scroll part of the compressor and a force applied to the electric motor shaft due to failure are clearly discriminated from each other, whereby a spectrum peak arising due to the failure can be detected.

In a case where, in the above step S8, the abnormality count determination unit 923 determines that the electric motor-provided equipment 1 (load 2 or electric motor 3) has a failure symptom and thus determines that there is abnormality, the diagnosis result reporting unit 93 accordingly causes the display unit 931 to display abnormality of the electric motor-provided equipment 1 as an alarm on a screen and causes the warning unit 932 to issue a warning. In addition, processing such as printing out is performed by the external output unit 933 (step S9).

In Embodiment 1, the failure symptom detection method has been described using the electric motor-provided equipment 1 in which the load 2 is the compressor 11, as an example. However, without limitation thereto, even if the load 2 is other than the compressor 11, the present invention is applicable to the electric motor-provided equipment 1 (e.g., a vacuum pump, a water pump, or a conveyor belt) for which failure symptom detection is difficult because a component other than that due to abnormality is superimposed.

In Embodiment 1, the configuration in which the control device 8 and the failure symptom detection device 9 are provided as independent devices has been described as a premise. However, the control device 8 and the failure symptom detection device 9 may be combined integrally as a single device.

As described above, according to Embodiment 1, a failure symptom is detected through analysis on current signals obtained by the control device 8 which controls operation of the electric motor-provided equipment 1. Thus, it becomes possible to assuredly detect a failure symptom without adding an extra sensor.

By using data in the acceleration period (region B in FIG. 8) until reaching a constant stable rotational speed from transitional variation occurring just after starting of the electric motor 3, it becomes possible to assuredly detect a failure symptom of a sliding part such as a bearing for which detection has been conventionally difficult due to the operation state of the electric motor-provided equipment 1.

### Embodiment 2

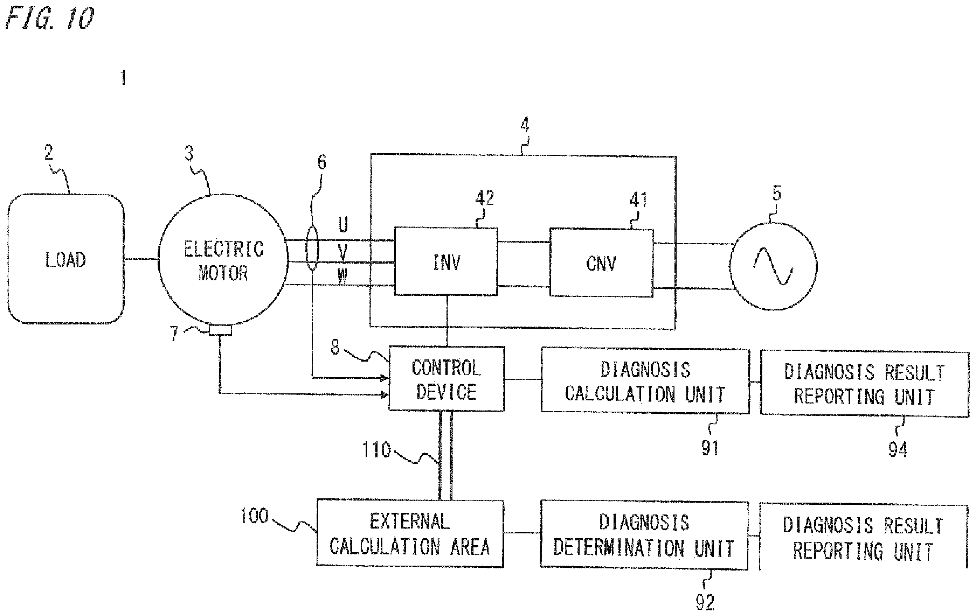

FIG. 10 is a block diagram showing a schematic configuration of electric motor-provided equipment and a failure symptom detection device according to Embodiment 2 of the present invention.

In the configuration shown in FIG. 10, the diagnosis calculation unit 91 and a diagnosis result reporting unit 94 are connected to the control device 8 of the electric motor-provided equipment 1, and meanwhile, the diagnosis determination unit 92 and the diagnosis result reporting unit 93 are provided on an external calculation area 100 side such as a personal computer (PC), a server, or a cloud. Then, the control device 8 and the external calculation area 100 are connected via a communication network 110 such as Ethernet, whereby data is mutually transmitted/received via the communication network 110.

The diagnosis calculation unit 91 connected to the control device 8 calculates index values (a rotational frequency component and the intensity value of a corresponding spectrum peak) for determination for presence/absence of abnormality of the electric motor-provided equipment 1, and the calculation result is transmitted to the external calculation area 100 side via the communication network 110. The diagnosis determination unit 92 provided on the external calculation area 100 side accumulates the transmitted data, performs diagnosis determination on the basis of the data, and outputs a result thereof to the diagnosis result reporting unit 93.

In a case where the diagnosis determination unit 92 determines that there is abnormality, information thereof is transmitted to the control device 8 via the communication network 110. Thus, not only the diagnosis result reporting unit 93 provided on the external calculation area 100 side but also the diagnosis result reporting unit 94 provided on the control device 8 side of the electric motor-provided equipment 1 can perform processing such as issuing a warning and performing alarm display, individually.

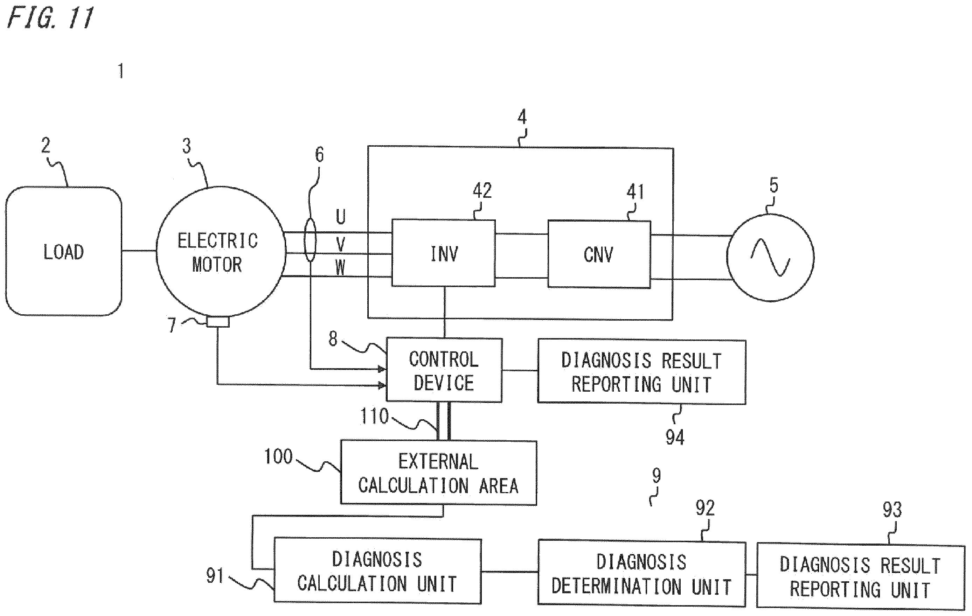

FIG. 11 is a block diagram showing another schematic configuration of electric motor-provided equipment and a failure symptom detection device according to Embodiment 2 of the present invention.

In the configuration shown in FIG. 11, the diagnosis result reporting unit 94 is provided to the control device 8 of the electric motor-provided equipment 1, and meanwhile, the diagnosis calculation unit 91, the diagnosis determination unit 92, and the diagnosis result reporting unit 93 composing the failure symptom detection device 9 are provided on the external calculation area 100 side. Then, the control device 8 and the external calculation area 100 are connected via the communication network 110 such as Ethernet, whereby data is mutually transmitted/received via the communication network 110.

Data of current signals acquired by the control device 8 is transmitted to the external calculation area 100 side via the communication network 110. The failure symptom detection device 9 provided in the external calculation area 100 causes the diagnosis calculation unit 91 to extract index values for determination for presence/absence of abnormality, through frequency analysis, and causes the diagnosis determination unit 92 to accumulate data and perform diagnosis determination and output a result thereof to the diagnosis result reporting unit 93.

In a case where the diagnosis determination unit 92 determines that there is abnormality, information thereof is transmitted to the control device 8 via the communication network 110. Thus, not only the diagnosis result reporting unit 93 provided on the external calculation area 100 side but also the diagnosis result reporting unit 94 provided on the control device 8 side of the electric motor-provided equipment 1 can perform processing such as issuing a warning and performing alarm display, individually.

Although the invention is described above in terms of various exemplary Embodiments 1 and 2, it should be understood that the various features, aspects, and functionality described in these embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention.

### DESCRIPTION OF THE REFERENCE CHARACTERS

- 1: electric motor-provided equipment (air conditioner)
- 2: load
- 3: electric motor
- 4: driving device
- 41: converter
- 42: inverter
- 5: AC power supply
- 11: compressor (load)
- 12: condenser
- 13: expansion valve
- 14: evaporator
- 6: current sensor
- 7: angle sensor
- 8: control device
- 81: d-q transformation unit
- 9: failure symptom detection device
- 91: diagnosis calculation unit
- 911: starting current extraction unit
- 912: d-q transformation unit
- 913: equipment information storage unit
- 914: data generation unit
- 915: frequency analysis unit
- 915a: spectrum analysis unit
- 915b: spectrum feature quantity detection unit
- 92: diagnosis determination unit
- 921: initial learning unit
- 922: reference value comparison unit
- 923: abnormality count determination unit
- 93: diagnosis result reporting unit
- 931: display unit
- 932: warning unit
- 933: external output unit

## Claims

1. A failure symptom detection device for an electric motor-provided equipment (1), which detects a failure symptom of the electric motor-provided equipment (1) including a load (2) with an electric motor (3) used as a motive-power source and a driving device (4) which supplies power to the electric motor (3) and drives the electric motor (3),
the failure symptom detection device comprising:
- a current detection unit (6) which detects current flowing from the driving device (4) to the electric motor (3);
- a diagnosis calculation unit (91) which calculates an index value for determination for presence/absence of abnormality of the electric motor-provided equipment (1), on the basis of a result of detection by the current detection unit (6);
- a diagnosis determination unit (92) which determines presence/absence of abnormality of the electric motor-provided equipment (1) on the basis of a result of calculation by the diagnosis calculation unit (91); and
- a diagnosis result reporting unit (93) which reports a result of diagnosis determined by the diagnosis determination unit (92), to outside,
**characterised in that**
the diagnosis calculation unit (91) includes
- a starting current extraction unit (911) which, from the current detected by the current detection unit (6), extracts current in an acceleration period until a constant rotational speed is reached after starting of the electric motor (3),
- a data generation unit (914) which divides data of the current in the acceleration period extracted by the starting current extraction unit (911), into plural pieces of data, and
- a frequency analysis unit (915) which performs frequency analysis on each piece of data divided by the data generation unit (914).

2. The failure symptom detection device for an electric motor-provided equipment (1) according to claim 1,
wherein the frequency analysis unit (915) includes
- a spectrum analysis unit (915a) which performs frequency analysis for current frequencies of each piece of data divided by the data generation unit (914), to generate a spectrum waveform, and
- a spectrum feature quantity detection unit (915b) which detects, as the index value, an intensity value of a spectrum peak in a rotational frequency band of the electric motor (3) on the basis of the spectrum waveform analyzed by the spectrum analysis unit (915a).

3. The failure symptom detection device for an electric motor-provided equipment (1) according to claim 2,
further comprising a d-q transformation unit (912) which performs d-q transformation of phase currents detected by the current detection unit (6), wherein
from q-axis current obtained through d-q transformation by the d-q transformation unit (912), the starting current extraction unit (911) extracts q-axis current in the acceleration period until the constant rotational speed is reached after starting of the electric motor (3).

4. The failure symptom detection device for an electric motor-provided equipment (1) according to claim 2,
wherein from phase current detected by the current detection unit (6), without performing d-q transformation thereof, the starting current extraction unit (911) extracts phase current in the acceleration period until the constant rotational speed is reached after starting of the electric motor (3).

5. The failure symptom detection device for an electric motor-provided equipment (1) according to any one of claims 2 to 4,
wherein the diagnosis determination unit (92) includes:
- an initial learning unit (921) which stores an initial analysis result serving as a reference value for determination comparison,
- a reference value comparison unit (922) which compares the reference value stored in the initial learning unit (921) and the intensity value of the spectrum peak in the rotational frequency band of the electric motor (3) detected by the spectrum feature quantity detection unit (915b), and
- an abnormality count determination unit (923) which counts a number of times the reference value comparison unit (922) determines that the intensity value exceeds the reference value and thus there is abnormality, and determines a diagnosis result in accordance with the counted number of abnormality determinations.

6. The failure symptom detection device for an electric motor-provided equipment (1) according to claim 5,
wherein the initial learning unit (921) learns the reference values under respective operation conditions corresponding to various operation patterns and outside environments of the electric motor-provided equipment (1), and the reference value comparison unit (922) performs comparison with the reference value stored in the initial learning unit (921) in accordance with the operation condition.

7. The failure symptom detection device for an electric motor-provided equipment (1) according to any one of claims 1 to 6,
wherein the diagnosis result reporting unit (93) includes at least one of a display unit (931) which displays presence/absence of abnormality of the electric motor-provided equipment (1), an external output unit (933) which outputs the presence/absence of abnormality to outside, and a warning unit (932) which issues a warning in a case where there is abnormality of the electric motor-provided equipment (1).

8. A failure symptom detection method for electric motor-provided equipment (1), for detecting a failure symptom of the electric motor-provided equipment (1) including a load (2) with an electric motor (3) used as a motive-power source and a driving device (4) which supplies power to the electric motor (3) and drives the electric motor (3),
the failure symptom detection method comprising:
- a first step of detecting current flowing to the electric motor (3);
- a second step of, from the current obtained in the first step, extracting current in an acceleration period until a constant rotational speed is reached after starting of the electric motor (3);
- a third step of dividing data of the current in the acceleration period extracted in the second step, into plural pieces of data, and performing frequency analysis on each divided piece of data, to generate a spectrum waveform;
- a fourth step of detecting a feature component of a spectrum peak arising in a rotational frequency band of the electric motor (3), from the spectrum waveform obtained in the third step;
- a fifth step of comparing an intensity value of the spectrum peak obtained in the fourth step and a predetermined reference value;
- a sixth step of determining presence/absence of abnormality of the electric motor-provided equipment (1) from a result of comparison in the fifth step; and
- a seventh step of reporting a result of determination in the sixth step to outside.

9. The failure symptom detection method for an electric motor-provided equipment (1) according to claim 8,
further comprising an eighth step of performing d-q transformation of phase current flowing to the electric motor (3) and detected in the first step, wherein
in the second step, q-axis current obtained in the eighth step in the acceleration period until the constant rotational speed is reached after starting of the electric motor (3), is extracted, and
in the third step, data of the q-axis current extracted in the second step is divided into plural pieces of data, and frequency analysis is performed on the divided pieces of data.

10. The failure symptom detection method for an electric motor-provided equipment (1) according to claim 8,
wherein
in the second step, phase current in the acceleration period until the constant rotational speed is reached after starting of the electric motor (3) is extracted without being subjected to d-q transformation, and
in the third step, data of the phase current extracted in the second step is divided into plural pieces of data, and frequency analysis is performed on each divided piece of data, to generate a spectrum waveform.

11. The failure symptom detection method for an electric motor-provided equipment (1) according to any one of claims 8 to 10,
wherein in performing the frequency analysis in the third step, filter processing is performed so as to emphasize only a feature component by applying compressed sensing to a current frequency characteristic having sparsity.

12. The failure symptom detection method for an electric motor-provided equipment (1) according to any one of claims 8 to 11,
wherein
in the fifth step, prior to comparing the intensity value of the spectrum peak with the reference value, initial learning is performed to store an initial analysis result as the reference value for determination comparison in advance, and
in the sixth step, a number of times it is determined from the result of comparison in the fifth step that the intensity value of the spectrum peak exceeds the reference value obtained through the initial learning and thus there is abnormality, is counted, and a diagnosis result is determined in accordance with the counted number of abnormality determinations.

13. The failure symptom detection method for an electric motor-provided equipment (1) according to claim 12,
wherein in the initial learning, the reference values are learned under respective operation conditions corresponding to various operation patterns and outside environments of the electric motor-provided equipment (1).

## Patentansprüche

1. Fehlersymptom-Detektionsvorrichtung für ein mit einem Elektromotor versehenes Gerät (1), die ein Fehlersymptom des mit einem Elektromotor versehenen Geräts (1) detektiert, das einen Verbraucher (2) mit einem Elektromotor (3), der als eine Antriebskraftquelle verwendet wird, und eine Antriebsvorrichtung (4) aufweist, die den Elektromotor (3) mit Energie versorgt und den Elektromotor (3) antreibt,
wobei die Fehlersymptom-Detektionsvorrichtung das Folgende aufweist:
- eine Stromdetektionseinheit (6), die Strom detektiert, der von der Antriebsvorrichtung (4) zu dem Elektromotor (3) fließt;
- eine Diagnoseberechnungseinheit (91), die einen Indexwert zum Bestimmen eines Vorhandenseins/Nichtvorhandenseins einer Abnormalität des mit einem Elektromotor versehenen Geräts (1) basierend auf einem Detektionsergebnis der Stromdetektionseinheit (6) berechnet;
- eine Diagnosebestimmungseinheit (92), die ein Vorhandensein/Nichtvorhandensein einer Abnormalität des mit einem Elektromotor versehenen Geräts (1) auf der Grundlage eines Berechnungsergebnisses der Diagnoseberechnungseinheit (91) bestimmt; und
- eine Diagnoseergebnis-Berichtseinheit (93), die ein Diagnoseergebnis, das von der Diagnosebestimmungseinheit (92) bestimmt worden ist, nach außen berichtet,
**dadurch gekennzeichnet,**
**dass** die Diagnoseberechnungseinheit (91) das Folgende aufweist:
- eine Anlaufstromextraktionseinheit (911), die aus dem Strom, der von der Stromdetektionseinheit (6) detektiert worden ist, einen Strom in einer Beschleunigungsperiode, bis nach dem Starten des Elektromotors (3) eine konstante Rotationsgeschwindigkeit erreicht ist, extrahiert,
- eine Datenerzeugungseinheit (914), welche Daten des Stroms in der Beschleunigungsperiode, die von der Anlaufstromextraktionseinheit (911) extrahiert worden sind, in mehrere Datenteile aufteilt, und
- eine Frequenzanalyseeinheit (915), die eine Frequenzanalyse an jedem Teil der Daten durchführt, die von der Datenerzeugungseinheit (914) aufgeteilt worden sind.

2. Fehlersymptom-Detektionsvorrichtung für ein mit einem Elektromotor versehenes Gerät (1) nach Anspruch 1,
wobei die Frequenzanalyseeinheit (915) das Folgende aufweist:
- eine Spektrumsanalyseeinheit (915a), die eine Frequenzanalyse für Stromfrequenzen an jedem Teil der Daten durchführt, die von der Datenerzeugungseinheit (914) aufgeteilt worden sind, um eine Spektrumswellenform zu erzeugen, und
- eine Einheit (915b) zur Detektion von Spektrumsmerkmalsgrößen, die als den Indexwert einen Intensitätswert eines Spektrums-Peaks in einem Rotationsfrequenzband des Elektromotors (3) basierend auf der Spektrumswellenform detektiert, die von der Spektrumsanalyseeinheit (915a) analysiert worden ist.

3. Fehlersymptom-Detektionsvorrichtung für ein mit einem Elektromotor versehenes Gerät (1) nach Anspruch 2,
die ferner eine d-q-Transformationseinheit (912) aufweist, die eine d-q-Transformation von Phasenströmen durchführt, die von der Stromdetektionseinheit (6) detektiert worden sind,
wobei die Anlaufstromextraktionseinheit (911) aus dem q-Achsenstrom, der durch die d-q-Transformation von der d-q-Transformationseinheit (912) erhalten worden ist, den q-Achsenstrom in der Beschleunigungsperiode, bis die konstante Rotationsgeschwindigkeit nach dem Start des Elektromotors (3) erreicht ist, extrahiert.

4. Fehlersymptom-Detektionsvorrichtung für ein mit einem Elektromotor versehenes Gerät (1) nach Anspruch 2,
wobei die Anlaufstromextraktionseinheit (911) aus dem von der Stromdetektionseinheit (6) detektierten Phasenstrom, ohne eine d-q-Transformation davon durchzuführen, Phasenstrom in der Beschleunigungsperiode, bis die konstante Rotationsgeschwindigkeit nach dem Starten des Elektromotors (3) erreicht ist, extrahiert.

5. Fehlersymptom-Detektionsvorrichtung für ein mit einem Elektromotor versehenes Gerät (1) nach einem der Ansprüche 2 bis 4,
wobei die Diagnosebestimmungseinheit (92) das Folgende aufweist:
- eine Initial-Lerneinheit (921), die ein initiales Analyseergebnis speichert, das als ein Referenzwert für einen Bestimmungsvergleich dient,
- eine Referenzwert-Vergleichseinheit (922), die den Referenzwert, der in der Initial-Lerneinheit (921) gespeichert ist, und den Intensitätswert des Spektrums-Peaks in dem Rotationsfrequenzband des Elektromotors (3) vergleicht, der von der Einheit (915b) zur Detektion von Spektrumsmerkmalsgrößen detektiert worden ist, und
- eine Abnormalitätsanzahl-Bestimmungseinheit (923), die eine Anzahl von Malen zählt, die die Referenzwert-Vergleichseinheit (922) bestimmt, dass der Intensitätswert den Referenzwert überschreitet und somit eine Abnormalität vorliegt, und ein Diagnoseergebnis gemäß der gezählten Anzahl von Abnormalitätsbestimmungen bestimmt.

6. Fehlersymptom-Detektionsvorrichtung für ein mit einem Elektromotor versehenes Gerät (1) nach Anspruch 5,
wobei die Initial-Lerneinheit (921) die Referenzwerte unter jeweiligen Betriebsbedingungen lernt, die mit verschiedenen Betriebsmustern und äußeren Umgebungen des mit einem Elektromotor versehenen Geräts (1) korrespondieren, und die Referenzwert-Vergleichseinheit (922) einen Vergleich mit dem Referenzwert, der in der Initial-Lerneinheit (921) gespeichert ist, gemäß den Betriebsbedingungen durchführt.

7. Fehlersymptom-Detektionsvorrichtung für ein mit einem Elektromotor versehenes Gerät (1) nach einem der Ansprüche 1 bis 6,
wobei die Diagnoseergebnis-Berichtseinheit (93) mindestens eine der folgenden Einheiten aufweist: eine Anzeigeeinheit (931), die das Vorhandensein/Nichtvorhandensein einer Abnormalität des mit einem Elektromotor versehenen Geräts (1) anzeigt, eine externe Ausgabeeinheit (933), die das Vorhandensein/Nichtvorhandensein einer Abnormalität nach außen ausgibt, und eine Warneinheit (932), die eine Warnung in einem Fall ausgibt, in dem eine Abnormalität des mit einem Elektromotor versehenen Geräts (1) vorliegt.

8. Fehlersymptom-Detektionsverfahren für ein mit einem Elektromotor versehenes Gerät (1), zum Detektieren eines Fehlersymptoms des mit einem Elektromotor versehenen Geräts (1), das einen Verbraucher (2) mit einem Elektromotor (3), der als Antriebskraftquelle verwendet wird, und eine Antriebsvorrichtung (4) aufweist, die den Elektromotor (3) mit Energie versorgt und den Elektromotor (3) antreibt,
wobei das Fehlersymptom-Detektionsverfahren die folgenden Schritte umfasst:
- einen ersten Schritt des Detektierens von Strom, der zu dem Elektromotor (3) fließt;
- einen zweiten Schritt des Extrahierens von Strom aus dem im ersten Schritt erhaltenen Strom in einer Beschleunigungsperiode, bis eine konstante Rotationsgeschwindigkeit nach dem Starten des Elektromotors (3) erreicht ist;
- einen dritten Schritt des Aufteilens von Daten des Stroms in der Beschleunigungsperiode, die im zweiten Schritt extrahiert worden sind, in mehrere Datenteile, und des Durchführens einer Frequenzanalyse an jedem aufgeteilten Datenteil, um eine Spektrumswellenform zu erzeugen;
- einen vierten Schritt des Detektierens einer Merkmalskomponente eines Spektrums-Peaks, der in einem Rotationsfrequenzband des Elektromotors (3) auftritt, aus der im dritten Schritt erhaltenen Spektrumswellenform;
- einen fünften Schritt des Vergleichens eines Intensitätswertes des Spektrums-Peaks, der im vierten Schritt erhalten worden ist, und einem vorbestimmten Referenzwert;
- einen sechsten Schritt des Bestimmens des Vorhandenseins/Nichtvorhandenseins einer Abnormalität des mit einem Elektromotor versehenen Geräts (1) aus einem Ergebnis des Vergleichs im fünften Schritt; und
- einen siebten Schritt des Berichtens eines Ergebnisses der Bestimmung im sechsten Schritt nach außen.

9. Fehlersymptom-Detektionsverfahren für ein mit einem Elektromotor versehenes Gerät (1) nach Anspruch 8,
das ferner einen achten Schritt des Durchführens einer d-q-Transformation von Phasenstrom umfasst, der zu dem Elektromotor (3) fließt und im ersten Schritt detektiert worden ist,
wobei
im zweiten Schritt der q-Achsenstrom extrahiert wird, der im achten Schritt in der Beschleunigungsperiode bis zum Erreichen der konstanten Rotationsgeschwindigkeit nach dem Starten des Elektromotors (3) erhalten wird, und
im dritten Schritt die Daten des im zweiten Schritt extrahierten q-Achsenstroms in mehrere Datenteile aufgeteilt werden und eine Frequenzanalyse an den aufgeteilten Datenstücken durchgeführt wird.

10. Fehlersymptom-Detektionsverfahren für ein mit einem Elektromotor versehenes Gerät (1) nach Anspruch 8,
wobei
im zweiten Schritt Phasenstrom in der Beschleunigungsperiode, bis die konstante Rotationsgeschwindigkeit nach dem Starten des Elektromotors (3) erreicht wird, extrahiert wird, ohne einer d-q-Transformation unterzogen zu werden, und
im dritten Schritt die Daten des im zweiten Schritt extrahierten Phasenstroms in mehrere Datenteile unterteilt werden und eine Frequenzanalyse an jedem unterteilten Datenteil durchgeführt wird, um eine Spektrumswellenform zu erzeugen.

11. Fehlersymptom-Detektionsverfahren für ein mit einem Elektromotor versehenes Gerät (1) nach einem der Ansprüche 8 bis 10,
wobei bei der Durchführung der Frequenzanalyse im dritten Schritt eine Filterverarbeitung durchgeführt wird, um nur eine Merkmalskomponente hervorzuheben, indem eine komprimierte Abtastung auf eine Stromfrequenzcharakteristik mit geringer Dichte erfolgt.

12. Fehlersymptom-Detektionsverfahren für ein mit einem Elektromotor versehenes Gerät (1) nach einem der Ansprüche 8 bis 11,
wobei
im fünften Schritt, vor dem Vergleichen des Intensitätswerts des Spektrums-Peaks mit dem Referenzwert, ein initiales Lernen durchgeführt wird, um ein initiales Analyseergebnis als Referenzwert für den Bestimmungsvergleich im Voraus zu speichern, und
im sechsten Schritt eine Anzahl von Malen gezählt wird, die aus dem Ergebnis des Vergleichs im fünften Schritt bestimmt wird, dass der Intensitätswert des Spektrums-Peaks den durch das initiale Lernen erhaltenen Referenzwert überschreitet und somit eine Abnormalität vorliegt, und ein Diagnoseergebnis gemäß der gezählten Anzahl von Abnormalitätsbestimmungen bestimmt wird.

13. Fehlersymptom-Detektionsverfahren für ein mit einem Elektromotor versehenes Gerät (1) nach Anspruch 12,
wobei beim initialen Lernen die Referenzwerte unter jeweiligen Betriebsbedingungen gelernt werden, die mit verschiedenen Betriebsmustern und äußeren Umgebungen des mit einem Elektromotor versehenen Geräts (1) korrespondieren.

## Revendications

1. Dispositif de détection de symptôme de défaillance pour un équipement à moteur électrique (1), qui détecte un symptôme de défaillance de l'équipement à moteur électrique (1) incluant une charge (2) avec un moteur électrique (3) utilisé comme source de puissance motrice et un dispositif d'entraînement (4) qui alimente une puissance au moteur électrique (3) et qui entraîne le moteur électrique (3),
le dispositif de détection de symptôme de défaillance comprenant :
- une unité de détection de courant (6) qui détecte un courant s'écoulant depuis le dispositif d'entraînement (4) jusqu'au moteur électrique (3) ;
- une unité de calcul de diagnostic (91) qui calcule une valeur d'indice pour une détermination d'une présence/absence d'anomalie de l'équipement à moteur électrique (1), sur la base d'un résultat de détection par l'unité de détection de courant (6) ;
- une unité de détermination de diagnostic (92) qui détermine une présence/absence d'anomalie de l'équipement à moteur électrique (1) sur la base d'un résultat de calcul par l'unité de calcul de diagnostic (91) ; et
- une unité de rapport de résultat de diagnostic (93) qui rapporte un résultat de diagnostic déterminé par l'unité de détermination de diagnostic (92), vers l'extérieur,
**caractérisé en ce que**
l'unité de calcul de diagnostic (91) inclut
- une unité d'extraction de courant de démarrage (911) qui, à partir du courant détecté par l'unité de détection de courant (6), extrait un courant dans une période d'accélération jusqu'à atteindre une vitesse de rotation constante après démarrage du moteur électrique (3),
- une unité de génération de données (914) qui divise des données du courant dans la période d'accélération extrait par l'unité d'extraction de courant de démarrage (911), en plusieurs éléments de données, et
- une unité d'analyse de fréquence (915) qui effectue une analyse de fréquence sur chaque élément de données divisé par l'unité de génération de données (914).

2. Dispositif de détection de symptôme de défaillance pour un équipement à moteur électrique (1) selon la revendication 1,
dans lequel l'unité d'analyse de fréquence (915) inclut
- une unité d'analyse de spectre (915a) qui effectue une analyse de fréquence pour des fréquences de courant de chaque élément de données divisé par l'unité de génération de données (914), pour générer une forme d'onde de spectre, et
- une unité de détection de caractéristique quantitative de spectre (915b) qui détecte, à titre de valeur d'indice, une valeur d'intensité d'une crête spectrale dans une bande de fréquence de rotation du moteur électrique (3) sur la base de la forme d'onde de spectre analysée par l'unité d'analyse de spectre (915a).

3. Dispositif de détection de symptôme de défaillance pour un équipement à moteur électrique (1) selon la revendication 2,
comprenant en outre une unité de transformation d-q (912) qui effectue une transformation d-q de courants de phase détectés par l'unité de détection de courant (6), dans lequel
à partir d'un courant d'axe q obtenues par une transformation d-q par l'unité de transformation d-q (912), l'unité d'extraction de courant de démarrage (911) extrait un courant d'axe q dans la période d'accélération jusqu'à atteindre la vitesse de rotation constante après démarrage du moteur électrique (3).

4. Dispositif de détection de symptôme de défaillance pour un équipement à moteur électrique (1) selon la revendication 2,
dans lequel, à partir d'un courant de phase détecté par l'unité de détection de courant (6), sans effectuer de transformation d-q de celui-ci, l'unité d'extraction de courant de démarrage (911) extrait un courant de phase dans la période d'accélération jusqu'à atteindre la vitesse de rotation constante après démarrage du moteur électrique (3).

5. Dispositif de détection de symptôme de défaillance pour un équipement à moteur électrique (1) selon l'une quelconque des revendications 2 à 4,
dans lequel l'unité de détermination de diagnostic (92) inclut :
- une unité d'apprentissage initial (921) qui stocke un résultat d'analyse initial servant de valeur de référence pour une comparaison de détermination,
- une unité de comparaison de valeur de référence (922) qui compare la valeur de référence stockée dans l'unité d'apprentissage initial (921) et la valeur d'intensité de la crête spectrale dans la bande de fréquence de rotation du moteur électrique (3) détectée par l'unité de détection de caractéristique quantitative de spectre (915b), et
- une unité de détermination de comptage d'anomalie (923) qui compte un nombre de fois où l'unité de comparaison de valeur de référence (922) détermine que la valeur d'intensité dépasse la valeur de référence et ainsi qu'il y a une anomalie, et détermine un résultat de diagnostic en accord avec le nombre compté de déterminations d'anomalie.

6. Dispositif de détection de symptôme de défaillance pour un équipement à moteur électrique (1) selon la revendication 5,
dans lequel l'unité d'apprentissage initial (921) apprend les valeurs de référence sous des conditions de fonctionnement respectives correspondant à divers motifs de fonctionnement et à des environnements extérieurs de l'équipement à moteur électrique (1), et l'unité de comparaison de valeur de référence (922) effectue une comparaison avec la valeur de référence stockée dans l'unité d'apprentissage initial (921) en accord avec la condition de fonctionnement.

7. Dispositif de détection de symptôme de défaillance pour un équipement à moteur électrique (1) selon l'une quelconque des revendications 1 à 6, dans lequel l'unité de rapport de résultat de diagnostic (93) inclut l'une au moins d'une unité d'affichage (931) qui affiche une présence/absence d'anomalie de l'équipement à moteur électrique (1), d'une unité de sortie externe (933) qui sort la présence/absence d'anomalie vers l'extérieur, et d'une unité d'avertissement (932) qui émet un avertissement dans un cas où il y a une anomalie de l'équipement à moteur électrique (1).

8. Procédé de détection de symptôme de défaillance pour un équipement à moteur électrique (1) destiné à détecter un symptôme de défaillance de l'équipement à moteur électrique (1) incluant une charge (2) avec un moteur électrique (3) utilisé comme source de puissance motrice et un dispositif d'entraînement (4) qui alimente une puissance au moteur électrique (3) et qui entraîne le moteur électrique (3),
le dispositif de détection de symptôme de défaillance comprenant :
- une première étape consistant à détecter un courant s'écoulant jusqu'au moteur électrique (3) ;
- une deuxième étape consistant à, à partir du courant obtenu dans la première étape, extraire un courant dans une période d'accélération jusqu'à atteindre une vitesse de rotation constante après démarrage du moteur électrique (3) ;
- une troisième étape consistant à diviser des données du courant dans la période d'accélération extrait dans la deuxième étape, en plusieurs éléments de données, et à effectuer une analyse de fréquence sur chaque élément de données divisé, pour générer une forme d'onde de spectre ;
- une quatrième étape consistant à détecter une composante caractéristique d'une crête spectrale s'élevant dans une bande de fréquence de rotation du moteur électrique (3), à partir de la forme d'onde de spectre obtenue dans la troisième étape ;
- une cinquième étape consistant à comparer une valeur d'intensité de la crête spectrale obtenue dans la quatrième étape et une valeur de référence prédéterminée ;
- une sixième étape consistant à déterminer une présence/absence d'anomalie de l'équipement à moteur électrique (1) à partir d'un résultat de comparaison dans la cinquième étape ; et
- une septième étape consistant à rapporter un résultat de détermination dans la sixième étape vers l'extérieur.

9. Procédé de détection de symptôme de défaillance pour un équipement à moteur électrique (1) selon la revendication 8,
comprenant en outre une huitième étape consistant à effectuer une transformation d-q d'un courant de phase s'écoulant jusqu'au moteur électrique (3) et détecté dans la première étape,
dans lequel
dans la deuxième étape, un courant d'axe q, obtenu dans la huitième étape dans la période d'accélération jusqu'à atteindre la vitesse de rotation constante après démarrage du moteur électrique (3), est extrait, et dans la troisième étape, des données du courant d'axe q extrait dans la deuxième étape sont divisées en plusieurs éléments de données, et une analyse de fréquence est effectuée sur les éléments de données divisés.

10. Procédé de détection de symptôme de défaillance pour un équipement à moteur électrique (1) selon la revendication 8,
dans lequel
dans la deuxième étape, un courant de phase dans la période d'accélération jusqu'à atteindre la vitesse de rotation constante après démarrage du moteur électrique (3) est extrait sans subir de transformation d-q, et
dans la troisième étape, des données du courant de phase extrait dans la deuxième étape sont divisées en plusieurs éléments de données, et une analyse de fréquence est effectuée sur chaque élément de données divisé, pour générer une forme d'onde de spectre.

11. Procédé de détection de symptôme de défaillance pour un équipement à moteur électrique (1) selon l'une quelconque des revendications 8 à 10, dans lequel, en effectuant l'analyse de fréquence dans la troisième étape, un traitement par filtre est effectué de manière à mettre l'accent uniquement sur une composante caractéristique en appliquant une détection comprimée sur une caractéristique de fréquence ayant une faible densité.

12. Procédé de détection de symptôme de défaillance pour un équipement à moteur électrique (1) selon l'une quelconque des revendications 8 à 11,
dans lequel
dans la cinquième étape, avant de comparer la valeur d'intensité de la crête spectrale à la valeur de référence, un apprentissage initial est effectué pour stocker une un résultat d'analyse initial à titre de valeur de référence pour une comparaison de détermination à l'avance, et
dans la sixième étape, il est compté un nombre de fois où il est déterminé à partir du résultat de comparaison dans la cinquième que la valeur d'intensité de la crête spectrale dépasse la valeur de référence obtenue par l'apprentissage initial et où ainsi il y a une anomalie, et un résultat de diagnostic est déterminé en accord avec le nombre compté de déterminations d'anomalie.

13. Procédé de détection de symptôme de défaillance pour un équipement à moteur électrique (1) selon la revendication 12,
dans lequel, dans l'apprentissage initial, les valeurs de référence sont apprises sous des conditions de fonctionnement respectives correspondant à divers motifs de fonctionnement et à des environnements extérieurs de l'équipement à moteur électrique (1).
